# EUROPEAN PATENT APPLICATION

(11) **EP 4 848 455 A1**
(43) Date of publication of application: **02.12.2026**
(21) Application number: 26177072.1
(22) Date of filing: 07.05.2026
(51) Int. Cl.: H01M 50/474, H01M 50/59, H01M 50/103, H01M 50/477, H01M 50/486

(54) **ELECTRICITY STORAGE DEVICE AND METHOD FOR MANUFACTURING ELECTRICITY STORAGE DEVICE**

(30) Priority: 30.05.2025 JP 2025090959
(71) Applicant: Prime Planet Energy & Solutions, Inc., Chuo-ku, Tokyo 103-0022 (JP)
(72) Inventor: TACHIBANA, Shogo, Tokyo 103-0022 (JP); OSHIMA, Kazuki, Tokyo 103-0022 (JP)
(74) Representative: Kuhnen & Wacker Patent- und Rechtsanwaltsbüro PartG mbB

(57) **Abstract**

A method for manufacturing an electricity storage device disclosed herein includes preparing a case body, preparing an internal structure formed by combining an electrode assembly, a first spacer, a second spacer, and an electrode assembly holder, and inserting the internal structure into the case body from a first opening, with the second spacer inserted first. The electrode assembly holder covers the electrode assembly which has the first spacer and the second spacer disposed on both sides thereof and protrudes from the electrode assembly on both sides thereof, and the portion of the electrode assembly holder that protrudes from the electrode assembly covers at least a portion of a first opposing wall portion of the first spacer and is bonded to the first spacer while wrapping around an edge of the first opposing wall portion that is located on a side farther from the electrode assembly.

## Description

### BACKGROUND OF THE DISCLOSURE

The technology disclosed herein relates to an electricity storage device and a method for manufacturing the electricity storage device.

U.S. Patent Application Publication No. 2022/0302533 discloses a secondary battery in which a positive electrode tab is formed at one end of an electrode assembly and a negative electrode tab is formed at the other end of the electrode assembly.

### SUMMARY

An electrode holder may be disposed between the electrode assembly and the case to insulate the electrode assembly from the case. If wrinkles form in the electrode holder, this can cause problems such as the precipitation of electrolyte (e.g., Li in a lithium-ion secondary battery).

Therefore, the inventors desire to reduce the tendency for wrinkles to form in the electrode holder.

An aspect of the disclosure is a method for manufacturing an electricity storage device, the electricity storage device including: an angular tubular case body having a rectangular cross section and open at both ends; a first cover attached to a first opening of the case body; a second cover attached to a second opening of the case body; an electrode assembly housed in the case body; a first spacer disposed between the first cover and the electrode assembly inside the case body; a second spacer disposed between the second cover and the electrode assembly inside the case body; and an electrode assembly holder covering the electrode assembly along an inner face of the case body, the method including: preparing the case body; preparing an internal structure formed by combining the electrode assembly, the first spacer, the second spacer, and the electrode assembly holder; and inserting the internal structure into the case body from the first opening, with the second spacer inserted first, in which the case body to be prepared includes a pair of opposing wide side faces, and a pair of opposing narrow side faces, the first spacer includes a partition wall portion disposed on the electrode assembly side between the first cover and the electrode assembly and having a length in a direction in which the pair of wide side faces oppose each other shorter than a length of the electrode assembly, and a pair of opposing wall portions each extending from the partition wall portion along inner faces of the pair of wide side faces of the case body, the electrode assembly holder covers the electrode assembly which has the first spacer and the second spacer disposed on both sides thereof, the electrode assembly holder protrudes from the electrode assembly on both sides thereof, and the portion of the electrode assembly holder that protrudes from the electrode assembly covers at least a portion of the opposing wall portions of the first spacer and is bonded to the first spacer while wrapping around edges of the opposing wall portions that are located on a side farther from the electrode assembly.

According to such a configuration, wrinkles in the electrode assembly holder are less likely to occur.

### BRIEF DESCRIPTION OF THE DRAWINGS

FIG. 1 is a perspective view schematically illustrating an electricity storage device 1.
FIG. 2 is a perspective view illustrating the electricity storage device 1 from a different perspective than in FIG. 1.
FIG. 3 is a schematic diagram illustrating the internal structure of the electricity storage device 1.
FIG. 4 is a perspective view schematically illustrating the structure of a first spacer 40.
FIG. 5 is a schematic cross-sectional view taken along line V-V in FIG. 2, illustrating an enlarged view of the vicinity of the first spacer 40.
FIG. 6 is a perspective view schematically illustrating the structure of a second spacer 50.
FIG. 7 is a schematic diagram illustrating an insulating sheet 900 before an electrode assembly holder 90 is formed.
FIG. 8 is a schematic diagram illustrating the construction of an internal structure 100.
FIGS. 9A and 9B are schematic diagrams illustrating a method for bonding a first extended portion 920.
FIGS. 10A and 10B are schematic diagrams illustrating an insertion step.
FIGS. 11A and 11B are schematic diagrams illustrating insertion of an internal structure 1100 where an electrode assembly holder 190 is bonded to an outer surface of the first spacer 40.

### DETAILED DESCRIPTION

Hereinafter, several embodiments of the disclosed technology will be described with reference to the drawings. The disclosed technology can be implemented based on the content disclosed herein and common knowledge in the technical field. Each drawing is drawn schematically and does not necessarily reflect the actual objects. Moreover, in each drawing, members and parts having the same function will be given the same reference numerals, and redundant description thereof will be omitted, as appropriate.

As used herein, the term "electricity storage device" generally refers to any device capable of repeated charging and discharging through the movement of charge carriers between a positive electrode and a negative electrode via an electrolyte. The concept of an electricity storage device encompasses secondary batteries such as lithium-ion secondary batteries and nickel-metal hydride batteries, as well as capacitors such as lithium-ion capacitors and electric double-layer capacitors.

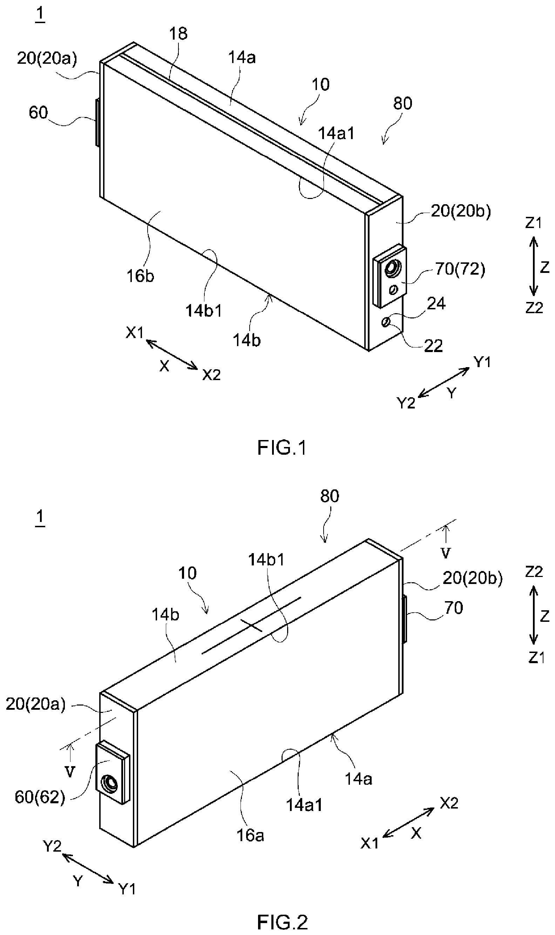

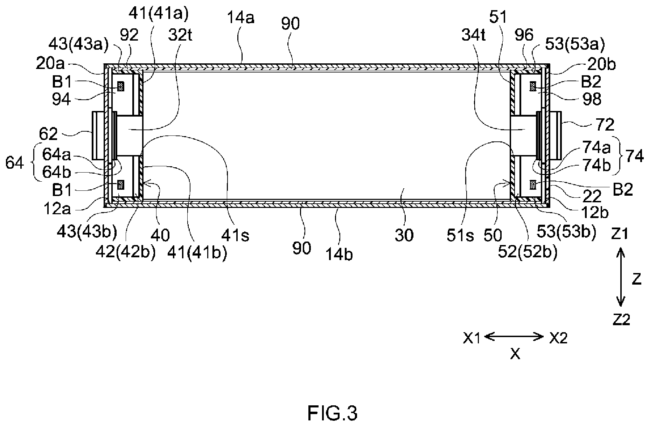

Hereinafter, the technology disclosed herein will be described by taking an electricity storage device 1, which is a secondary battery, as an example of an embodiment. FIG. 1 is a perspective view schematically illustrating the electricity storage device 1. FIG. 2 is a perspective view illustrating the electricity storage device 1 from a different perspective than in FIG. 1. FIG. 3 is a schematic diagram illustrating the internal structure of the electricity storage device 1. Herein, the reference letters X, Y, and Z in the drawings are also referred to as a first direction, a second direction, and a third direction, respectively.

As illustrated in FIGS. 1 to 3, the electricity storage device 1 includes a case body 10, a cover 20, an electrode assembly 30, an electrolyte (not shown), a first spacer 40, a second spacer 50, and an electrode assembly holder 90. Each component will be described below.

The case body 10 is a rectangular tubular member having a pair of openings at both ends in the first direction X. The case body 10 has a first opening 12a on one side X1 in the first direction X and a second opening 12b on the other side X2 (see FIG. 3). The case body 10 has a rectangular cross-section perpendicular to the first direction X. The case body 10 includes a pair of narrow side faces 14a, 14b and a pair of wide side faces 16a, 16b. The narrow side faces 14a, 14b are a pair of plate-like portions facing each other in the third direction Z. The narrow side faces 14a, 14b each extend along the first direction X. Herein, the direction in which the pair of narrow side faces 14a, 14b face each other (i.e., the third direction Z in the drawings) is also referred to as the "direction in which the narrow side faces oppose each other." On the other hand, as illustrated in FIGS. 1 and 2, the wide side faces 16a, 16b are rectangular plate-like portions extending from an edge 14a1 of the one narrow side 14a toward an edge 14b1 of the other narrow side 14b. The wide side faces 16a, 16b face each other in the second direction Y. Herein, the direction in which the pair of wide side faces 16a, 16b oppose each other (i.e., the second direction Y in the drawings) is also referred to as the "direction in which the wide side faces oppose each other." The wide side faces 16a, 16b each extend along the first direction X. Furthermore, as illustrated in FIGS. 1 and 2, the case body 10 according to this embodiment is a rectangular prism member. The area of the wide side faces 16a, 16b is larger than the area of the narrow side faces 14a, 14b. That is, the dimension of the wide side faces 16a, 16b in the third direction Z is longer than the dimension of the narrow side faces 14a, 14b in the second direction Y.

The case body 10 can be manufactured, for example, by bending a single metal plate into a tubular shape and joining the seam (e.g., by welding). Therefore, in the case body 10 illustrated in FIG. 1, a welded joint 18 extending along the first direction X is formed on the narrow side 14a on one side Z1 of the third direction Z. The material for the case body 10 is preferably a metal material such as aluminum, aluminum alloy, iron, or iron alloy.

The cover 20 is a pair of plate-like members that seal a pair of openings (first opening 12a, second opening 12b) in the case body 10. In this embodiment, the cover 20 is a rectangular plate-like member where its dimension in the third direction Z is longer than its dimension in the second direction Y. The battery case 80 is constructed by sealing the pair of openings in the case body 10 with this cover 20. The material for each cover 20 is preferably the same type of metal material as the case body 10 (aluminum, aluminum alloy, iron, iron alloy, etc.).

As illustrated in FIGS. 1 and 2, the pair of covers 20 face each other in the first direction X. In the following description, the cover 20 on the one side X1 of the first direction X is referred to as a first cover 20a, and the cover 20 on the other side X2 of the first direction X is referred to as a second cover 20b. The first cover 20a is fitted to the first opening 12a. The second cover 20b is fitted to the second opening 12b. The second cover 20b has a filling hole 22 used for filling the battery case 80 with electrolyte. The filling hole 22 is an opening extending through the second cover 20b. During the manufacture of the electricity storage device 1, the interior of the battery case 80 is filled with electrolyte through this filling hole 22. After the interior is filled with electrolyte, the filling hole 22 is sealed by a sealing plug 24.

As illustrated in FIGS. 1 and 2, a negative electrode terminal 60 is attached to the first cover 20a. The negative electrode terminal 60 is provided at a central portion of the case body 10 in the direction in which the narrow side faces14a, 14b oppose each other (the third direction Z). The negative electrode terminal 60 includes a negative electrode external terminal 62 and a negative electrode internal terminal 64. The negative electrode internal terminal 64 includes a first negative current collector plate 64a and a second negative current collector plate 64b. The first negative current collector plate 64a is connected to the negative electrode external terminal 62. The first negative current collector plate 64a is connected to the second negative current collector plate 64b. The negative electrode external terminal 62 extends through the first cover 20a and is exposed outside the battery case 80. The negative electrode internal terminal 64 is housed inside the battery case 80. The negative electrode internal terminal 64 is connected to a negative electrode tab 32t of the electrode assembly 30. Specifically, the second negative current collector plate 64b is connected to the negative electrode tab 32t. Herein, components forming the conductive path from the electrode assembly 30 inside the battery case 80 to an external terminal outside the battery case 80 (the negative electrode external terminal 62 or the positive electrode external terminal 72) are collectively referred to as "internal conductive member". In the electricity storage device 1, the negative electrode internal terminal 64 and the negative electrode tab 32t constitute the internal conductive member on the negative electrode side. The method used to connect each member is not particularly limited and may be, for example, laser welding, ultrasonic bonding, or resistance welding.

As illustrated in FIGS. 1 and 2, a positive electrode terminal 70 is attached to the second cover 20b. The positive electrode terminal 70 is provided at a central portion of the case body 10 in the direction in which the narrow side faces 14a, 14b oppose each other (the third direction Z). In this embodiment, the filling hole 22 is formed at one end (the other side Z2 of the third direction Z) of the second cover 20b in the direction in which the narrow side faces 14a, 14b oppose each other, spaced apart from the positive electrode terminal 70. The positive electrode terminal 70 includes a positive electrode external terminal 72 and a positive electrode internal terminal 74. The positive electrode internal terminal 74 includes a first positive current collector plate 74a and a second positive current collector plate 74b. The first positive current collector plate 74a is connected to the positive electrode external terminal 72. The first positive current collector plate 74a is connected to the second positive current collector plate 74b. As illustrated in FIG. 3, the positive electrode external terminal 72 extends through the second cover 20b and is exposed outside the battery case 80. The positive electrode internal terminal 74 is housed inside the battery case 80. The positive electrode internal terminal 74 is connected to a positive electrode tab 34t of the electrode assembly 30. Specifically, the second positive current collector plate 74b and the positive electrode tab 34t are connected to each other. Thus, the internal conductive member on the positive electrode terminal side consists of the positive electrode internal terminal 74 and the positive electrode tab 34t. The method used to connect each member is not particularly limited and may be, for example, laser welding, ultrasonic bonding, or resistance welding.

The electrode assembly 30 serves as a power generation element in the electricity storage device 1. As illustrated in FIG. 3, the electrode assembly 30 is housed inside the battery case 80 (specifically, inside the case body 10). Specifically, the electrode assembly 30 is disposed at a central portion in the first direction X, positioned between the pair of covers 20. The electrode assembly 30 includes the negative electrode tab 32t on the one side X1 of the first direction X and the positive electrode tab 34t on the other side X2 of the first direction X. The negative electrode tab 32t protrudes toward the first cover 20a from an end face of the electrode assembly 30 on the one side X1 of the first direction X. The positive electrode tab 34t protrudes toward the second cover 20b from an end face of the electrode assembly 30 on the other side X2 of the first direction X. The structure and materials of the electrode assembly 30 may be modified as appropriate according to the type of the electricity storage device 1 and are not intended to limit the technology disclosed herein; therefore, a detailed description is omitted. For example, the electrode assembly 30 may be a laminated electrode assembly in which sheet-like positive electrodes and sheet-like negative electrodes are alternately stacked in an insulated state, or may be a wound electrode assembly in which sheet-like positive electrodes and sheet-like negative electrodes are wound in an insulated state. Furthermore, although the electricity storage device 1 includes one electrode assembly 30, in other embodiments, the electricity storage device 1 may include two or more electrode bodies.

While not illustrated in the drawings, the electrolyte is contained within the battery case 80. The electrolyte may have any composition that can be used in a typical secondary battery, without particular limitation.

As illustrated in FIG. 3, in the electricity storage device 1, the first spacer 40 is disposed between the first cover 20a and the electrode assembly 30. Further, the second spacer 50 is disposed between the second cover 20b and the electrode assembly 30. The first spacer 40 and the second spacer 50 prevent electrical conduction between the electrode assembly 30 and the covers 20. Further, the first spacer 40 and the second spacer 50 restrict movement of the electrode assembly 30 in the first direction X. With this configuration, the electrode assembly 30 (e.g., the negative electrode tab 32t and the positive electrode tab 34t) is less susceptible to damage. The material of the first spacer 40 and the second spacer 50 is not particularly limited. For example, the first spacer 40 and the second spacer 50 may be composed of a resin material that has resistance to the electrolyte used, electrical insulation properties, and the ability to undergo elastic deformation. Examples of such resin materials include polyolefin resins such as polypropylene (PP) and polyethylene (PE); fluororesins such as polyfluoroethylene-perfluoroalkoxyethylene copolymer (PFA) and polytetrafluoroethylene (PTFE); and polyphenylene sulfide (PPS). Note that, the first spacer 40 and the second spacer 50 may be composed of different materials.

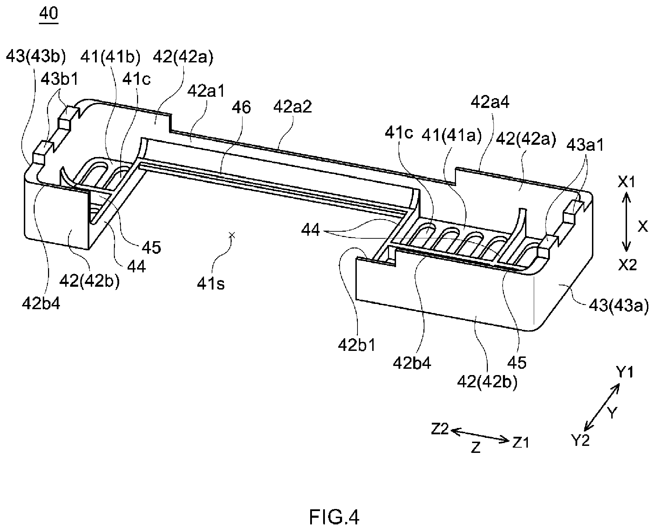

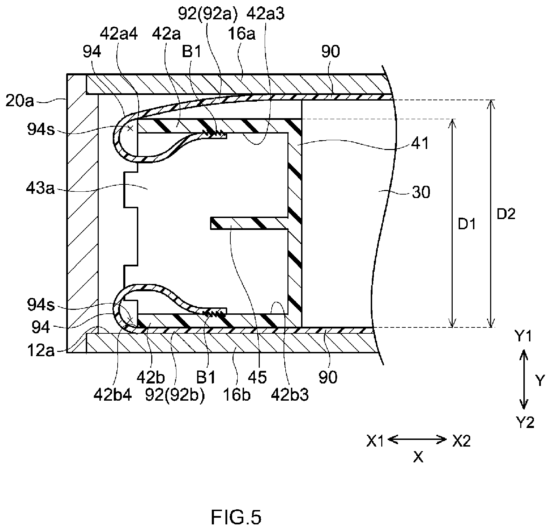

FIG. 4 is a perspective view schematically showing the structure of the first spacer 40. FIG. 5 is a schematic cross-sectional view taken along line V-V in FIG. 2, illustrating an enlarged view of the vicinity of the first spacer 40. As illustrated in FIGS. 3 to 5, the first spacer 40 includes a partition wall portion 41, a pair of first opposing wall portions 42, and a pair of second opposing wall portions 43.

As illustrated in FIG. 3, the partition wall portion 41 is disposed on the electrode assembly 30 side (in the X2 direction in FIG. 3) between the first cover 20a and the electrode assembly 30. The partition wall portion 41 is a plate-like portion disposed to face an end face of the electrode assembly 30 on the one side X1. The partition wall portion 41 extends in the direction in which the narrow side faces oppose each other 14a, 14b (the third direction Z). The partition wall portion 41 has a space 41s near its central portion in the direction in which the narrow side faces14a, 14b oppose each other. As illustrated in FIG. 4, the space 41s is a cutout portion formed in the direction in which the wide side faces16a, 16b oppose each other, extending from one side to the other side (Y1 direction). The internal conductive member (here, the negative electrode tab 32t) is disposed within the space 41s. That is, a conductive path is formed between the electrode assembly 30 and the negative electrode external terminal 62 through the space 41s. The partition wall portion 41 is divided by the space 41s in the direction in which the narrow side faces 14a, 14b oppose each other (the third direction Z) into a first partition wall portion 41a, which is disposed on the narrow side 14a side, and a second partition wall portion 41b, which is disposed on the narrow side 14b side. Here, the area of the first partition wall portion 41a is larger than the area of the second partition wall portion 41b.

As illustrated in FIG. 4, the partition wall portion 41 has a plurality of through holes 41c. The through holes 41c extend through the partition wall portion 41 in the thickness direction (first direction X). The electrolyte contained within the battery case 80 can pass through these through holes 41c. This facilitates the flow of electrolyte into and out from the electrode assembly 30 at the end face (end face on the one side X1 of the first direction X) facing the partition wall portion 41 of the electrode assembly 30. The number of the through holes 41c is not particularly limited. Further, while the through hole 41c is elliptical in this embodiment, the shape of the through hole 41c is not particularly limited. Note that, in some embodiments, the through holes 41c may be omitted.

As illustrated in FIG. 5, a length D1 of the partition wall portion 41 in the direction in which the pair of wide side faces oppose each other 16a, 16b of the case body 10 (the second direction Y) is shorter than a length D2 of the electrode assembly 30 in the direction in which the pair of wide side faces 16a, 16b oppose each other of the case body 10 (the second direction Y). The difference between the length D1 of the partition wall portion 41 in the second direction Y and the length D2 of the electrode assembly 30 in the second direction Y (D2 - D1) is not particularly limited, but may be, for example, 1 mm or more, 2 mm or more, or 3 mm or more. With this configuration, it is less likely for wrinkles to form in the electrode assembly holder 90 between the electrode assembly 30 and the case body 10 during an insertion process described later. Further, the difference between the length D1 of the partition wall portion 41 in the second direction Y and the length D2 of the electrode assembly 30 in the second direction Y (D2 - D1) is not particularly limited, but may be, for example, 10 mm or less, 8 mm or less, or 5 mm or less. With this configuration, it is easier to restrict movement of the first spacer 40 in the direction in which the pair of wide side faces 16a, 16b oppose each other (second direction Y) of the case body 10. The length D1 of the partition wall portion 41 in the direction in which the pair of wide side faces oppose each other 16a, 16b (second direction Y) refers to the length of the partition wall portion 41 in the second direction Y from the portion closest to the one wide side 16a of the partition wall portion 41 to the portion closest to the other wide side 16b. That is, the length D1 includes the length of the space 41s existing between the first partition wall portion 41a and the second partition wall portion 41b.

As illustrated in FIG. 3, the length of the partition wall portion 41 in the direction in which the pair of narrow side faces 14a, 14b oppose each other (third direction Z) of the case body 10 is longer than the length of the electrode assembly 30 in the direction in which the pair of narrow side faces14a, 14b oppose each other (third direction Z) of the case body 10. With this configuration, a gap is created between the electrode holder 90 and the electrode assembly 30, thereby reducing the likelihood of wrinkling in the electrode holder 90 due to friction between the electrode holder 90 and the electrode assembly 30.

As illustrated in FIG. 5, the pair of first opposing wall portions 42 extend from the partition wall portion 41 along inner surfaces of the pair of wide side faces 16a, 16b of the case body 10. The pair of first opposing wall portions 42 includes a first opposing wall portion 42a (hereinafter also referred to as "one first opposing wall portion 42a") extending along the inner surface of the one wide side face 16a of the case body 10, and a first opposing wall portion 42b (hereinafter also referred to as "the other first opposing wall portion 42b") extending along the inner surface of the other wide side face 16b.

As illustrated in FIG. 4, the one first opposing wall portion 42a extends toward the one side X1 of the first direction X from an edge of the partition wall portion 41 on the one wide side face 16a side (Y1 direction side). The one first opposing wall portion 42a includes a portion extending from an edge of the first partition wall portion 41a, a portion extending from the second partition wall portion 41b, and a connecting portion 42a1 that connects these two portions. The connecting portion 42a1 extends in the third direction Z along the inner surface of the one wide side face 16a. In this embodiment, the connecting portion 42a1 is positioned closer to the first cover 20a (X1 direction side) than the partition wall portion 41 and is spaced apart from the end face of the electrode assembly 30 on the one X1 side. Further, the one first opposing wall portion 42a has a recessed portion 42a2 that is recessed from the first cover 20a side (X1 direction side) toward the partition wall portion 41 side (X2 direction side). The recessed portion 42a2 facilitates positioning of the negative electrode tab 32t and the negative electrode internal terminal 64. Note that, in some embodiments, the recessed portion 42a2 may be omitted. Also, in some embodiments, the connecting portion 42a1 may be in contact with the end face of the electrode assembly 30.

The other first opposing wall portion 42b extends toward the one side X1 of the first direction X from an edge of the partition wall portion 41 on the other wide side face 16b side (Y2 direction side). The other first opposing wall portion 42b extends from the edges of the first partition wall portion 41a and the second partition wall portion 41b, respectively. The other first opposing wall portion 42b has a step portion 42b1 that is recessed from the first cover 20a side (X1 direction side) toward the partition wall portion 41 side (X2 direction side). The step portion 42b1 facilitates positioning of the negative electrode tab 32t and the negative electrode internal terminal 64.

As illustrated in FIG. 3, the pair of second opposing wall portions 43 extend from the partition wall portion 41 along the inner surfaces of the pair of narrow side faces 14a, 14b of the case body 10. The pair of second opposing wall portions 43 includes a second opposing wall portion 43a (hereinafter also referred to as "one second opposing wall portion 43a") extending along the inner surface of the one narrow side face 14a and a second opposing wall portion 43b (hereinafter also referred to as "the other second opposing wall portion 43b") extending along the inner surface of the other narrow side face 14b.

The one second opposing wall portion 43a extends from an edge of the partition wall portion 41 on the one narrow side face 14a side (Z1 direction side) toward the one side X1 of the first direction X. The one second opposing wall portion 43a also extends from one edge (edge of the one first opposing wall portion 42a) to another edge (edge of the other first opposing wall portion 42b) of the pair of first opposing wall portions 42 on the one narrow side face 14a side. The one second opposing wall portion 43a has a protruding portion 43a1 on its end face on the first cover 20a side (X1 direction side). The protruding portion 43a1 protrudes toward the first cover 20a side. In this embodiment, two protruding portions 43a1 are formed. The protruding portions 43a1 facilitate securing space for arranging other components such as the negative electrode internal terminal 64. The number of the protruding portions 43a1 is not limited, and in some embodiments, the protruding portions 43a1 may be omitted.

The other second opposing wall portion 43b extends from an edge of the partition wall portion 41 on the other narrow side 14b side (Z2 direction side) toward the one side X1 of the first direction X. The other second opposing wall portion 43b also extends from one edge (edge of the one first opposing wall portion 42a) to the other edge (edge of the other first opposing wall portion 42b) on the other narrow side 14b side of the pair of first opposing wall portions 42. The other second opposing wall portion 43b has a protruding portion 43b1 on its end face on the first cover 20a side (X1 direction side). The protruding portion 43b1 protrudes toward the first cover 20a side (see FIG. 4). In this embodiment, two of the protruding portions 43b1 are formed. The protruding portions 43b1 facilitate positioning of other components such as the negative electrode internal terminal 64. The number of the protruding portions 43b1 is not limited, and in some embodiments, the protruding portions 43b1 may be omitted.

As illustrated in FIG. 4, the first spacer 40 includes a first rib 44 bridging between the pair of first opposing wall portions 42. The first rib 44 is disposed between the pair of second opposing wall portions 43. The first rib 44 extends from a surface of the partition wall portion 41 toward the first cover 20a side (X1 direction). The height of the first rib 44 (its length from the surface of the partition wall portion 41) is lower than that of the pair of first opposing wall portions 42 and the pair of second opposing wall portions 43. The first rib 44 can improve the strength of the first spacer 40. The first spacer 40 includes three first ribs 44, but this number is not particularly limited. The first ribs 44 may be provided on both edges of the space 41 s of the partition wall portion 41 in the third direction Z. With this configuration, the strength of the first spacer 40 can be further improved. Further, the first rib 44 is inclined away from the partition wall portion 41 (X1 direction) at a portion in contact with the first opposing wall portion 42 (inner faces 42a3, 42b3 of the first opposing wall portions 42a, 42b). With this configuration, the first rib 44 is less prone to damage.

As illustrated in FIG. 4, the first spacer 40 includes a second rib 45 bridging between the first ribs 44 or between the first rib 44 and the second opposing wall portions 43. The second rib 45 extends from the surface of the partition wall portion 41 toward the first cover 20a side (X1 direction). The height of the second rib 45 (its length from the surface of the partition wall portion 41) is lower than that of the pair of first opposing wall portions 42 and the pair of second opposing wall portions 43. In this embodiment, the second rib 45 is formed at the center of the space in which the pair of first opposing wall portions 42 oppose each other. The second rib 45 can improve the strength of the first spacer 40. The number and formation positions of the second ribs 45 is not particularly limited. Further, the second rib 45 is inclined away from the partition wall portion 41 (in the X1 direction) at a portion in contact with the second opposing wall portions 43. With this configuration, the second rib 45 is less susceptible to damage.

As illustrated in FIG. 4, the first spacer 40 includes a bridging portion 46 bridging the first ribs 44 provided on both edges of the space 41s of the partition wall portion 41 in the third direction Z. The bridging portion 46 extends toward the direction in which the pair of second opposing wall portions 43 oppose each other (third direction Z). The bridging portion 46 protrudes in the direction Y2 from the inner surface of the one first opposing wall portion 42a. The bridging portion 46 is positioned closer to the first cover 20a side (X1 direction side) than the partition wall portion 41 and is spaced apart from an end face of the electrode assembly 30 on the one side X1. The bridging portion 46 can improve the strength of the first spacer 40. Further, the bridging portion 46 has a portion inclined toward the X2 direction as it moves away from the inner surface of the one first opposing wall portion 42a. With this configuration, the risk of the bridging portion 46 damaging the negative electrode tab 32t that is inserted into the space 41s can be reduced.

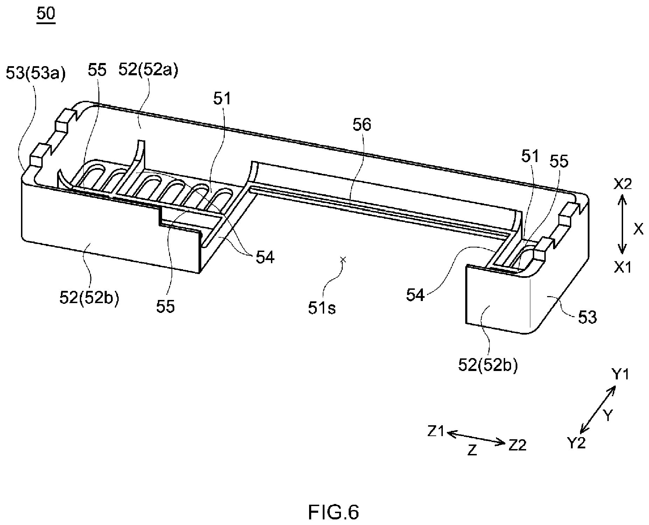

FIG. 6 is a perspective view schematically illustrating the structure of the second spacer 50. The second spacer 50 includes a partition wall portion 51, a pair of first opposing wall portions 52, a pair of second opposing wall portions 53, a first rib 54, a second rib 55, and a bridging portion 56. These components correspond to the partition wall portion 41, the pair of first opposing wall portions 42, the pair of second opposing wall portions 43, the first rib 44, the second rib 45, and the bridging portion 46 of the first spacer 40 described above, respectively. Accordingly, the partition wall portion 51 of the second spacer 50 is disposed on the electrode assembly 30 side between the second cover 20b and the electrode assembly 30, and its length in the direction (second direction Y) in which the pair of wide side faces 16a, 16b of the case body 10 oppose each other is shorter than that of the electrode assembly 30. Further, the pair of first opposing wall portions 52 of the second spacer 50 extend from the partition wall portion 51 toward the second cover 20b side, respectively, along the inner surfaces of the pair of wide side faces 16a, 16b of the case body 10. Detailed description of the other configurations of the second spacer 50 will be omitted.

As illustrated in FIG. 3, the electrode assembly holder 90 is disposed between the electrode assembly 30 and the case body 10, covering the electrode assembly 30. The electrode assembly holder 90 is disposed along the inner surface of the case body 10. Specifically, the electrode assembly holder 90 is disposed between the inner surfaces of the pair of narrow side faces 14a, 14b of the case body 10 and the electrode assembly 30, and between the inner surfaces of the pair of wide side faces 16a, 16b and the electrode assembly 30. The electrode assembly holder 90 is an insulating member that insulates the case body 10 and the electrode assembly 30 from each other. The electrode assembly holder 90 may also be referred to as an insulating film. The electrode assembly holder 90 is formed in a tubular shape (in this embodiment, an angular tube shape with a rectangular cross-section) capable of accommodating the electrode assembly 30 internally.

The material of the electrode holder 90 is not particularly limited and may be the same as those conventionally used. Examples of such materials include polyolefin resins such as polypropylene (PP) and polyethylene (PE), and fluororesins such as perfluoroalkoxy alkanes and polytetrafluoroethylene (PTFE).

The thickness of the electrode assembly holder 90 is preferably 50 µm or more from the perspective of strength, and more preferably 100 µm or more. The thickness of the electrode assembly holder 90 is preferably 250 µm or less from the perspective of increasing the capacity within the battery case 80, and may be 200 µm or less.

As illustrated in FIG. 3, the electrode assembly holder 90 protrudes from the electrode assembly 30 toward both the first spacer 40 side and the second spacer 50 side. That is, at least a portion of the first spacer 40 and at least a portion of the second spacer 50 are covered by the electrode assembly holder 90. In this embodiment, the pair of first opposing wall portions 42 and the pair of second opposing wall portions 43 of the first spacer 40, as well as the pair of first opposing wall portions 52 and the pair of second opposing wall portions 53 of the second spacer 50, are covered by the electrode assembly holder 90. The configuration of the electrode assembly holder 90 on the first spacer 40 side will now be described.

As illustrated in FIG. 5, the electrode assembly holder 90 includes an overhanging portion 92 disposed between outer surfaces of the pair of first opposing wall portions 42 of the first spacer 40 and the pair of wide side faces 16a, 16b of the case body 10. The overhanging portion 92 covers the outer surfaces of the pair of first opposing wall portions 42 of the first spacer 40. The protruding portion 92 is not bonded to the outer surfaces of the pair of first opposing wall portions 42 of the first spacer 40. A protruding portion 92a on the side of the one wide side face 16a of the case body 10 (hereinafter also referred to as "one protruding portion 92a") forms a gap with the one first opposing wall portion 42a of the first spacer 40. This gap can be formed by the difference between the length D1 of the partition wall portion 41 of the first spacer 40 in the second direction Y and the length D2 of the electrode assembly 30 in the second direction Y. On the other hand, a protruding portion 92b on the other wide side face 16b side of the case body 10 (hereinafter also referred to as "the other protruding portion 92b") is in gapless contact with the outer surface of the other first opposing wall portion 42b of the first spacer 40. However, in some embodiments, a gap may exist between the protruding portion 92 and the outer surface of the other first opposing wall portion 42b of the first spacer 40.

As illustrated in FIG. 5, the protruding portion 92 includes a wrap-around portion 94 that wraps around edges of the pair of first opposing wall portions 42a, 42b of the first spacer 40 that are located on a side far from the electrode assembly 30 (edges 42a4, 42b4 of the pair of first opposing wall portions 42a, 42b on the first cover 20a side) and is bonded to the first spacer 40. In other words, at least a portion of the wrap-around portion 94 is disposed between the first spacer 40 and the first cover 20a. With this configuration, a space is created for the electrode assembly holder 90, which is disposed between the electrode assembly 30 and the one wide side face 16a of the case body 10, to slide toward the first cover 20a. Therefore, when friction occurs toward the one side X1 of the first direction X on the electrode assembly holder 90, wrinkles may form in the electrode assembly holder 90 between the electrode assembly 30 and the one wide side face 16a of the case body 10. However, since the wrap-around portion 94 of the electrode assembly holder 90 can absorb the occurrence of wrinkles, wrinkles are less likely to form. Further, since at least a portion of the wrap-around portion 94 is disposed between the first spacer 40 and the first cover 20a, insulation reliability between the negative electrode tab 32t and the first cover 20a can be enhanced.

As illustrated in FIG. 5, the wrap-around portion 94 of the electrode assembly holder 90 is bonded to the first spacer 40 in a slack state while wrapping around the edges 42a4, 42b4 of the first opposing wall portions 42 that are located on a side farther from the electrode assembly 30. In other words, because the wrap-around portion 94 is in a slack state, the electrode assembly holder 90 is not fixed to the edges 42a4, 42b4 of the pair of first opposing wall portions 42a, 42b of the first spacer 40 on the first cover 20a side (i.e., the electrode assembly holder 90 is not bent with the edges 42a4, 42b4 as fulcrums). This provides greater room for the electrode assembly holder 90, which is disposed between the electrode assembly 30 and the one wide side face 16a of the case body 10, to slide toward the first cover 20a side, making it less prone to wrinkling. Further, the reduced tension on the electrode assembly holder 90 makes it less susceptible to damage due to deterioration. Note that, the "slack state of the wrap-around portion 94" refers to a state where a gap 94s exists between end faces of the pair of first opposing wall portions 42 of the first spacer 40, which is farther from the electrode assembly 30, and the wrap-around portion 94, as illustrated in FIG. 5.

As illustrated in FIG. 5, the wrap-around portion 94 is bonded to the inner faces 42a3, 42b3 of the first opposing wall portions 42a, 42b of the first spacer 40 via a bonding portion B1. With this configuration, the wrap-around portion 94 can be positioned closer to the negative electrode tab 32t, thereby further enhancing insulation reliability.

The bonding portion B1 is provided at one, or two or more locations on each of the inner faces 42a3, 42b3 of the pair of first opposing wall portions 42a, 42b of the first spacer 40. In this embodiment, the bonding portion B1 is provided at two locations: a portion extending from the first partition wall 41a of the pair of first opposing wall portions 42a, 42b (the end on the side of the one second opposing wall portion 43a); and a portion extending from the second partition wall 41b (the end on the side of the other second opposing wall portion 43b).

The bonding portion B1 is formed, for example, by ultrasonic bonding, heat welding, adhesive tape, etc. Among these methods, it is preferable that the bonding portion B1 is a welded joint formed by heat welding. With heat welding, the bonding portion B1 can be easily formed even on the inner faces 42a3, 42b3 of the first opposing wall portions 42a, 42b of the first spacer 40.

The area (bonding area) of the bonding portion B1 is preferably 10 mm² or more, and more preferably 15 mm² or more, from the viewpoint of bonding strength. The upper limit of the area of the bonding portion B1 is not particularly limited, but may be, for example,100 mm² or less, 50 mm² or less, or 25 mm² or less. Further, when the bonding portion B1 is provided at two or more locations, the range of the area of the bonding portion B1 described above refers to the range of the area of each individual bonding portion B1.

It is preferable that the length of the bonding portion B1 in the direction in which the pair of second facing wall portions 43 oppose each other (third direction Z) of the first spacer 40 is longer than the length of the bonding portion B1 in the direction in which the first cover 20a and the electrode assembly 30 oppose each other (first direction X). With this configuration, the formation of the wrap-around portion 94 of the electrode assembly holder 90 is facilitated across the entire third direction Z.

Although not shown in the drawings, the electrode assembly holder 90 is bonded to the outer surfaces of the pair of second opposing wall portions 43a, 43b of the first spacer 40. With this configuration, the position of the electrode assembly holder 90 is fixed. The method for bonding the electrode assembly holder 90 may be, for example, ultrasonic bonding, heat welding, or adhesive tape. The bonding location may be one location or two or more locations on each of the pair of second opposing wall portions 43. Further, in some embodiments, the electrode assembly holder may not be bonded to the second opposing wall portions of the first spacer.

The configuration of the electrode assembly holder 90 on the first spacer 40 side has been described above. The configuration of the electrode assembly holder 90 on the second spacer 50 side may be similar to that on the first spacer 40 side. That is, as illustrated in FIG. 3, the protruding portion 96, which is the portion of the electrode assembly holder 90 protruding from the electrode assembly 30 toward the second spacer 50, covers the pair of first opposing wall portions 52 of the second spacer 50. The electrode assembly holder 90 also includes a wrap-around portion 98 formed by wrapping around the edges of the pair of first opposing wall portions 52 of the second spacer 50 on the side farther from the electrode assembly 30. The wrap-around portion 98 is bonded to the second spacer 50 via a bonding portion B2. With this configuration, the electrode assembly holder 90 that is disposed between the electrode assembly 30 and the one wide side face 16a of the case body 10 can have room to slide toward the second cover 20b. Thus, even if friction occurs toward the other side X2 of the first direction X at the electrode assembly holder 90 disposed between the electrode assembly 30 and the one wide side face 16a of the case body 10, wrinkling is less likely to occur. Additionally, since at least a portion of the wrap-around portion 98 is disposed between the second spacer 50 and the first cover 20a, insulation reliability between the positive electrode tab 34t and the second cover 20b is improved. The protruding portion 96, the wrap-around portion 98, and the bonding portion B2 may be configured based on the protruding portion 92, the wrap-around portion 94, and the bonding portion B1 described above, respectively, and thus detailed description of these components is omitted.

The electricity storage device 1 can be used for various applications. Suitable applications include automotive applications, specifically as a drive power source installed in vehicles such as electric vehicles (BEVs), hybrid vehicles (HEVs), and plug-in hybrid vehicles (PHEVs). The electricity storage device 1 can also be used as a storage battery such as a small power storage unit. The electricity storage device 1 can typically also be used in the form of a battery module including a plurality of the electricity storage devices 1 connected in series and/or parallel.

Now, a manufacturing method disclosed herein will be described, using a method for manufacturing the electricity storage device 1 as an example. An example of the method for manufacturing the electricity storage device 1 includes a case body preparation step of preparing the case body 10, an internal structure preparation step of preparing an internal structure 100 by combining the electrode assembly 30, the first spacer 40, the second spacer 50, and the electrode assembly holder 90, and an insertion step of inserting the internal structure 100 into the interior of the case body 10 through the first opening 12a, with the second spacer 50 inserted first. Note that other steps may be included at any stage in addition to these steps. For example, after the insertion step, a sealing step, an electrolyte filling step, an activation step, an aging step, or the like may be included. These other steps may be performed according to conventionally known methods. Additionally, the case body preparation step and the internal structure preparation step may be performed either before or after each other, or they may be performed simultaneously.

In the case body preparation step, the case body 10 described above may be prepared. The case body 10 may be manufactured, for example, by bending a single metal plate into a tubular shape and joining the seam (e.g., by welding). The case body 10 may also be created by combining multiple metal plates.

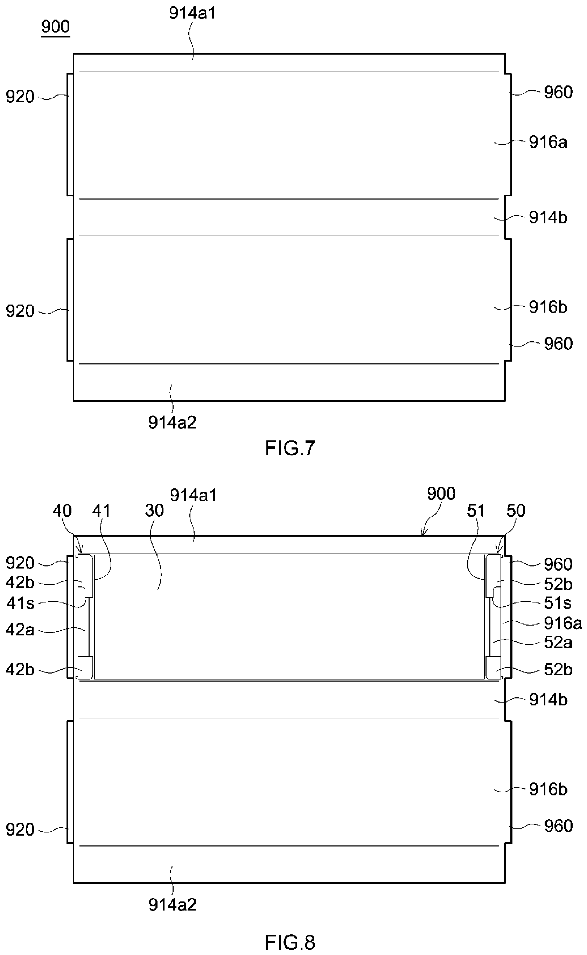

In the internal structure preparation step, the electrode assembly 30, the first spacer 40, the second spacer 50, and the electrode assembly holder 90 are assembled. FIG. 7 is a schematic diagram illustrating an insulating sheet 900 before the electrode assembly holder 90 is formed. FIG. 8 is a schematic diagram illustrating the construction of the internal structure 100. As illustrated in FIG. 7, first, the insulating sheet 900 is prepared. The material, thickness, and other properties of the insulating sheet 900 may be the same as those of the electrode assembly holder 90 described above. As illustrated in FIG. 7, the insulating sheet 900 includes a first narrow face 914a1, a first wide face 916a, a second narrow face 914b, a second wide face 916b, and a third narrow face 914a2. All of these faces have a rectangular shape, share a long side with an adjacent face (i.e., they are continuous), and are arranged in the stated order in a predetermined direction. The first wide face 916a and the second wide face 916b have a larger area than the first narrow face 914a1, the second narrow face 914b, and the third narrow face 914a2. In this embodiment, the first narrow face 914a1 has a smaller area than the second narrow face 914b and the third narrow face 914a2.

When housed within the case body 10, the first wide face 916a and the second wide face 916b are faces that oppose the inner faces of the pair of wide side faces 16a, 16b of the case body 10, respectively. Further, when housed within the case body 10, the first narrow face 914a1 and the third narrow face 914a2 are faces that oppose the one narrow side face 14a of the case body 10. When housed within the case body 10, the second narrow face 914b is a face that opposes the other narrow side face 14b of the case body 10.

A first extended portion 920 extends from one short side (left side in FIG. 7) of the first wide face 916a and the second wide face 916b, and a second extended portion 960 extends from the other short side (right side in FIG. 7). The first extended portion 920 and the second extended portion 960 each have a rectangular surface, with their long sides sharing part or all (in this embodiment, part) of the short side of the first wide side face 916a or the second wide side face 916b. In some embodiments, the first extended portion 920 and the second extended portion 960 may not be rectangular. Further, in some embodiments, the second extended portion 960 may be omitted.

Next, as illustrated in FIG. 8, the electrode assembly 30, the first spacer 40, and the second spacer 50 are placed on the first wide face 916a of the insulating sheet 900. The electrode assembly 30 is disposed such that a negative electrode tab (not shown) is on the first extended portion 920 side and a positive electrode tab (not shown) is on the second extended portion 960 side. The electrode assembly 30 is disposed such that it does not protrude beyond the first wide face 916a. The first spacer 40 is disposed such that the partition wall portion 41 is on the end face side where the negative electrode tab of the electrode assembly 30 is provided. In this case, the space 41s of the first spacer 40 is disposed such that the negative electrode tab passes through it. The one first opposing wall portion 42a of the first spacer 40 is disposed such that it is on the first wide face 916a side of the insulating sheet 900. The second spacer 50 is disposed such that the partition wall portion 51 is on the end face side where the positive electrode tab of the electrode assembly 30 is provided. The one first opposing wall portion 52a of the second spacer 50 is disposed to be on the first wide face 916a side of the insulating sheet 900. In this case, the space 51s of the second spacer 50 is disposed such that the positive electrode tab passes through it. In this embodiment, in a plan view (view illustrated in FIG. 8), the first spacer 40 and the second spacer 50 are disposed so as not to protrude beyond the first wide face 916a. However, in some embodiments, a portion of the first spacer 40 and a portion of the second spacer 50 may be disposed so as to protrude beyond the first wide face 916a.

In the insulating sheet 900, creases or grooves are provided at boundary portions (shared sections of edges constituting each face) with adjacent faces. These creases or grooves serve as indicators for the positions where the insulating sheet 900 is to be folded. In this embodiment, grooves are provided on one face of the insulating sheet 900. These grooves are preferably provided on a face that will become the outer face after bending, as this facilitates bending at the portion provided with grooves. The cross-sectional shape of the groove is not particularly limited, but a shape tapering toward the bottom (e.g., triangular, trapezoidal, polygonal, etc.) is preferred. Such a configuration further facilitates bending and makes assembly of the electrode assembly holder 90 easier.

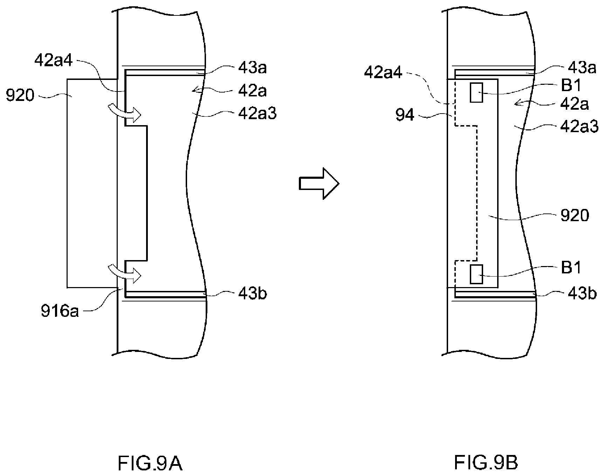

Next, the first extended portion 920 extending from the first wide face 916a of the insulating sheet 900 is bent, and the first extended portion 920 is bonded to the first spacer 40. FIGS. 9A and 9B are schematic diagrams illustrating a method for bonding the first extended portion 920. FIG. 9A is a schematic diagram illustrating the first extended portion 920 before bending, and FIG. 9B is a schematic diagram illustrating the first extended portion 920 after bending. Note that in these figures, the configuration of the first spacer 40 is partially omitted to facilitate explanation. As illustrated in FIGS. 9A and 9B, the first extended portion 920 is bent toward the first wide face 916a. This causes the first wide face 916a and the first extended portion 920 to sandwich the one first opposing wall portion 42a of the first spacer 40. Then, the inner face 42a3 of the one first opposing wall portion 42a and the first extended portion 920 are bonded together to form the bonding portion B1. The method for bonding may be, for example, ultrasonic bonding, heat welding, or adhesive tape. This forms the wrap-around portion 94. Then, although not shown, the second extended portion 960 extending from the first wide face 916a of the insulating sheet 900 is similarly folded toward the first wide face 916a. Then, the second extended portion 960 is bonded to the second spacer 50 (specifically, to the inner face of the one first opposing wall portion 52a of the second spacer 50) to form the wrap-around portion 98.

Next, the first narrow face 914a1, the first wide face 916a, the second narrow face 914b, the second wide face 916b, and the third narrow face 914a2 of the insulating sheet 900 are folded at the boundary portions adjacent to other faces so as to cover the area around the electrode assembly 30, thereby forming the insulating sheet 900 into a rectangular tubular shape. At this time, the first narrow face 914a1 and the third narrow face 914a2 overlap at positions opposing the second narrow face 914b, with the first narrow face 914a1 on the electrode assembly 30 side. Then, the overlapped first narrow face 914a1 and third narrow face 914a2 are welded to a side face of the first spacer 40 (e.g., the one second opposing wall portion 43a) and a side face of the second spacer 50 (e.g., the one second opposing wall portion 53a). With this configuration, the insulating sheet 900 is fixed as the rectangular tubular shape. Further, similar to the welding of the first extended portion 920 extending from the first wide face 916a described above (see FIGS. 9A and 9B), the first extended portion 920 and the second extended portion 960, which extend from the second wide face 916b, are welded to the inner face of the other first opposing wall portion 42b of the first spacer 40 and the inner face of the other first opposing wall portion 52b of the second spacer 50, respectively. This forms the electrode assembly holder 90. The order of folding at the boundary portions of each face of the insulating sheet 900 described above is one example and is not particularly limited.

In the internal structure 100 formed as described above, the electrode assembly 30 in which the first spacer 40 and the second spacer 50 are disposed on the both sides is covered by the electrode assembly holder 90. Further, in the internal structure 100, the electrode assembly holder 90 protrudes beyond the electrode assembly 30 on both sides of the electrode assembly 30. The portions protruding from the electrode assembly 30 cover at least a portion of the first opposing wall portion 42 of the first spacer 40 and are bonded to the first spacer 40 while wrapping around the edge 42a4 of the one first opposing wall portion 42a that is located on a side farther from the electrode assembly 30.

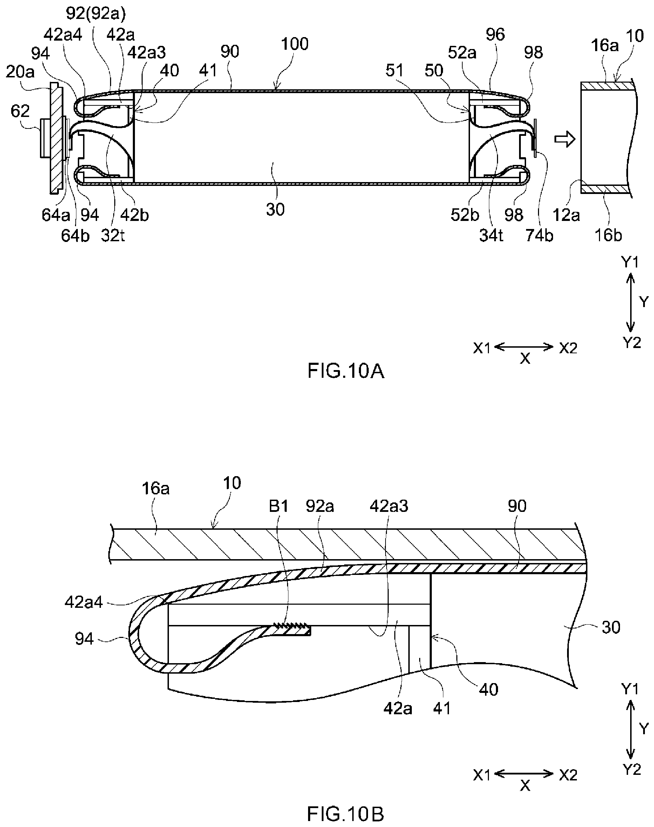

Next, in this embodiment, the second negative current collector plate 64b, which is the negative electrode internal terminal 64, is bonded to the negative electrode tab 32t of the electrode assembly 30 of the internal structure 100 (see FIG. 10A, described later). The negative electrode tab 32t and the second negative current collector plate 64b are bonded, for example, by ultrasonic bonding, laser welding, or resistance welding. Meanwhile, a first cover assembly is constructed by attaching the negative electrode external terminal 62 to the first cover 20a and further bonding the negative electrode external terminal 62 to the first negative current collector plate 64a. Then, the first cover assembly is attached to the internal structure 100 by bonding the first negative current collector plate 64a to the second negative current collector plate 64b. Further, in this embodiment, the second negative current collector plate 74b is bonded to the positive electrode tab 34t of the internal structure 100 (see FIG. 10A).

The insertion step includes inserting the internal structure 100 into the interior of the case body 10. FIG. 10A and 10B are schematic diagrams illustrating the insertion step. FIG. 10A is a schematic diagram illustrating a state before inserting the internal structure 100 into the case body 10. FIG. 10B is an enlarged schematic view illustrating the vicinity of the boundary between the first spacer 40 and the electrode assembly 30 on the one wide side face 16a of the case body 10 after inserting the internal structure 100 into the interior of the case body 10. As illustrated in FIG. 10A, during the insertion step, the internal structure 100 is inserted into the interior of the case body 10 through the first opening 12a of the case body 10, with the second spacer 50 inserted first (i.e., the second spacer 50 is inserted into the case body 10 before the first spacer 40).

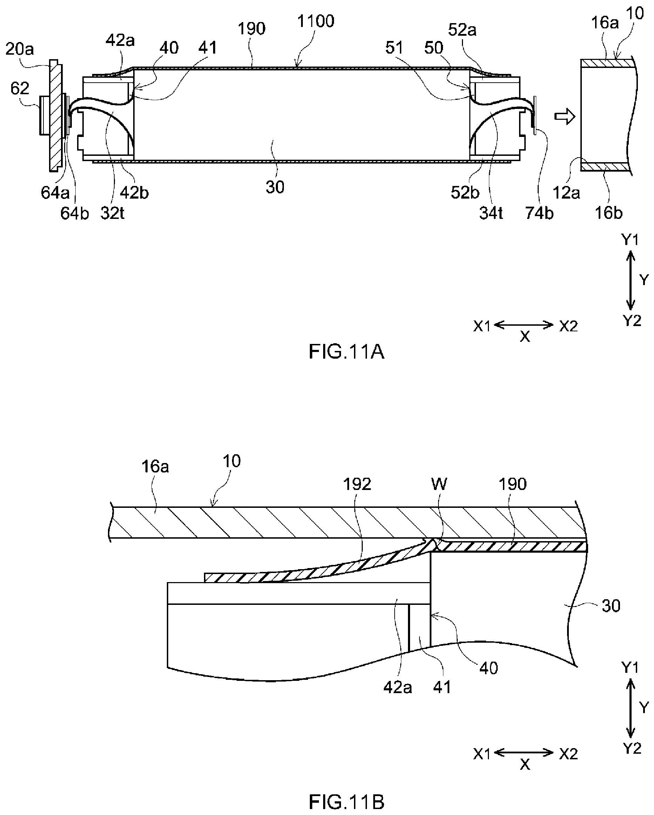

Incidentally, when inserting the internal structure 100 into the case body 10, friction may occur between the electrode assembly holder 90 and the case body 10, causing wrinkles to form on the electrode assembly holder 90. FIGS. 11A and 11B are schematic diagrams illustrating the insertion of an internal structure 1100 in which an electrode assembly holder 190 is bonded to the outer surface of the first spacer 40. As illustrated in FIG. 11A, in the internal structure 1100, the electrode assembly holder 190 is bonded to flat outer faces of the pair of first opposing wall portions 42a, 42b of the first spacer 40. When the internal structure 1100 is inserted into the case body 10 with the second spacer 50 side inserted first, friction with the case body 10 stretches the electrode assembly holder 190, causing the stretched portion (excess length) to shift toward the first spacer 40 side. In this embodiment, since the electrode assembly holder 190 is bonded to the outer face of the first spacer 40 in the internal structure 1100, the excess length may not be able to shift all the way to the space between the first spacer 40 and the case body 10 (the protruding portion 192 of the electrode assembly holder 190). As a result, wrinkles W in the electrode assembly holder 190 occur between the electrode assembly 30 and the case body 10, as illustrated in FIG. 11B. Particularly, if the wrinkles W of the electrode holder 190 occur between the pair of wide side faces 16 of the case body 10 and the electrode assembly 30, applying a restraining pressure in the direction in which the pair of wide side faces 16 oppose each other of the case body 10 causes variation in the restraining pressure. This variation can lead to the precipitation of the electrolyte (e.g., lithium precipitation in a lithium-ion secondary battery). Particularly, in the second direction Y, if the second spacer 50 is shorter than the electrode assembly 30, a step is created between the electrode assembly 30 and the second spacer 50, which increases the excess allowance of the electrode assembly holder 190 and makes wrinkle formation more likely.

On the other hand, as illustrated in FIG. 10A, in this embodiment, within the internal structure 100, the electrode assembly holder 90 is bonded to the first spacer 40 in a slack state while wrapping around the edge 42a4 of the one first opposing wall portion 42a that is located on a side farther from the electrode assembly 30. Thus, even when excess material in the electrode assembly holder 90 between the electrode assembly 30 and the one wide side face 16a of the case body 10 shifts toward the first spacer 40 when inserting the internal structure 100 into the case body 10, the excess material is absorbed by the wrap-around portion 94. Consequently, wrinkles are less likely to occur in the electrode assembly holder 90 between the one wide side face 16a of the case body 10 and the electrode assembly 30. Note that, while the electrode assembly holder 90 between the one wide side face 16a of the case body 10 and the electrode assembly 30 is used as an example here, the same applies to other side faces of the case body 10. This technology is particularly effective on faces where a step exists between the electrode assembly 30 and the second spacer 50 in the second direction Y (the direction in which the pair of wide side faces oppose each other 16), as illustrated in FIG. 10A (i.e., surfaces where excess material of the electrode assembly holder 90 is likely to occur).

In the internal structure 100, the electrode assembly holder 90 is bonded to the first spacer 40 in a slack state while wrapping around the edge 42a4 of the first opposing wall portion 42a that is located on the side farther from the electrode assembly 30. That is, the wrap-around portion 94 is in a slack state. This makes it easier for wrinkles generated during insertion to be absorbed by the wrap-around portion, thereby making wrinkles less likely to occur.

Further, in the internal structure 100, the portion (wrap-around portion 94) of the electrode assembly holder 90 that is wrapped around the edge 42a4 of the first opposing wall portion 42a of the first spacer 40 on the side farther from the electrode assembly 30 is bonded to the inner face 42a3 of the first opposing wall portion 42a of the first spacer 40. With this configuration, wrinkles generated during insertion can be more readily absorbed by the wrap-around portion, further reducing the likelihood of wrinkles forming.

Additionally, in the internal structure 100, the electrode assembly holder 90 includes the wrap-around portion 98 that wraps around the edge of the first opposing wall portion 52a of the second spacer 50 that is located on a side farther from the electrode assembly 30. With this configuration, it is less likely for the edge of the electrode assembly holder 90 on the side of the second spacer 50 to catch on the edge of the first opening 12a of the case body 10, thereby facilitating insertion of the internal structure 100 into the case body 10.

After inserting the internal structure 100 into the case body 10, the second positive current collector plate 74b, which is bonded to the positive electrode tab 34t, is bonded to the first positive current collector plate 74a of the second cover assembly, which is a combination of the second cover 20b, the positive electrode external terminal 72, and the first positive current collector plate 74a. Then, the boundary between the first cover 20a and the case body 10, and the boundary between the second cover 20b and the case body 10, are welded (e.g., laser welded).

Subsequently, a conventionally known method such as an electrolyte filling process, an activation process, or an aging process may be performed as desired to manufacture the electricity storage device 1. These processes are not characteristic of the present technology and therefore a description of them is omitted.

The above description of the present technology has been provided using the electricity storage device 1, one embodiment of the disclosed technology, as an example. It should be noted that the disclosed technology is not limited to the above-described embodiments and that this technology can be implemented in various other forms. The technology described in the claims includes various modifications and alterations of the exemplary embodiments described above. For example, it is possible to replace part of the above-described embodiment with another modified embodiment, and it is also possible to add other modified embodiments to the above-described embodiment. Additionally, unless particular problems arise, it is possible to appropriately omit part of the above-described embodiment.

In the manufacturing method described above, the first cover assembly is attached to the negative electrode tab 32t before inserting the internal structure 100 into the case body 10, and insertion into the case body 10 is performed with the positive electrode tab 34t side (the second spacer 50 side) inserted first. However, no limitation is intended. In some embodiments, the second cover assembly may be attached to the positive electrode tab before inserting the internal structure into the case body. Then, after inserting the internal structure into the case body with the negative electrode tab side inserted first, the first cover assembly may be attached to the negative electrode tab.

In the first spacer 40 described above, the area of the first partition wall portion 41a is larger than the area of the second partition wall portion 41b, but no limitation is intended. In some embodiments, the area of the first partition wall portion may be smaller than the area of the second partition wall portion, or these areas may be the same.

In the first spacer 40 described above, the partition wall portion 41 is divided into the first partition wall portion 41a and the second partition wall portion 41b by the space 41s, but no limitation is intended. In some embodiments, the partition wall portion may include a connecting portion that connects the first partition wall portion and the second partition wall portion.

The electrode assembly holder 90 described above covers the pair of first opposing wall portions 42 and the pair of second opposing wall portions 43 of the first spacer 40, as well as the pair of first opposing wall portions 52 and the pair of second opposing wall portions 53 of the second spacer 50, but no limitation is intended. In some embodiments, the electrode assembly holder may cover only a pair of opposing walls of the first spacer and the second spacer opposing the wide side faces of the case body.

The wrap-around portion 94 of the electrode assembly holder 90 described above is bonded to the inner faces 42a3, 42b3 of the first opposing wall portions 42a, 42b of the first spacer 40 while wrapping around the edges of the first opposing wall portions 42a, 42b that are located on a side farther from the electrode assembly 30. However, no limitation is intended. In some embodiments, the wrap-around portion of the electrode assembly holder may be bonded to an end face, which opposes the first cover, of the first opposing wall portion of the first spacer. With this configuration, the wrap-around portion is less likely to come into contact with the electrode tab, thereby minimizing damage to the electrode tab. Further, in some embodiments, the wrap-around portion of the electrode assembly holder may be bonded to a location other than the one first opposing wall portion of the wrapped first spacer. For example, the wrap-around portion may be bonded to a partition wall portion, to an opposite wall (the other first opposing wall portion), or to the second opposing wall portion.

The wrap-around portion 94 of the electrode assembly holder 90 described above is formed on each of the first opposing wall portions 42a, 42b of the first spacer 40, but no limitation is intended. In some embodiments, the wrap-around portion of the electrode assembly holder may be formed only on the one first opposing wall portion side of the first spacer.

The following items are examples of specific aspects of the technology disclosed herein.

### Item 1

A method for manufacturing an electricity storage device, the electricity storage device including:
an angular tubular case body having a rectangular cross section and open at both ends;
a first cover attached to a first opening of the case body;
a second cover attached to a second opening of the case body;
an electrode assembly housed in the case body;
a first spacer disposed between the first cover and the electrode assembly inside the case body;
a second spacer disposed between the second cover and the electrode assembly inside the case body; and
an electrode assembly holder covering the electrode assembly along an inner face of the case body, the method including:
   preparing the case body;
   preparing an internal structure formed by combining the electrode assembly, the first spacer, the second spacer, and the electrode assembly holder; and
   inserting the internal structure into the case body from the first opening, with the second spacer inserted first, in which
   the case body to be prepared includes
      a pair of opposing wide side faces, and
      a pair of opposing narrow side faces,
   the first spacer includes
      a partition wall portion disposed on the electrode assembly side between the first cover and the electrode assembly and having a length in a direction in which the pair of wide side faces oppose each other shorter than a length of the electrode assembly, and
      a pair of opposing wall portions each extending from the partition wall portion along inner faces of the pair of wide side faces of the case body,
   the electrode assembly holder covers the electrode assembly which has the first spacer and the second spacer disposed on both sides thereof,
   the electrode assembly holder protrudes from the electrode assembly on both sides thereof, and
   the portion of the electrode assembly holder that protrudes from the electrode assembly covers at least a portion of the opposing wall portions of the first spacer and is bonded to the first spacer while wrapping around edges of the opposing wall portions that are located on a side farther from the electrode assembly.

### Item 2

The method for manufacturing an electricity storage device according to Item 1, in which, in the internal structure, the electrode assembly holder is bonded to the first spacer in a slack state while wrapping around the edges of the opposing wall portions that are located on a side farther from the electrode assembly.

### Item 3

The method for manufacturing an electricity storage device according to Item 1 or 2, in which, in the internal structure, a portion of the electrode assembly holder that is wrapped around the edges of the opposing wall portions on the side farther from the electrode assembly is bonded to inner faces of the opposing wall portions of the first spacer.

### Item 4

The method for manufacturing an electricity storage device according to any one of Items 1 to 3, in which
the second spacer includes
   a partition wall portion disposed on the electrode assembly side between the second cover and the electrode assembly and having a length in the direction in which the pair of wide side faces oppose each other shorter than the length of the electrode assembly, and
   a pair of opposing wall portions each extending from the partition wall portion along inner faces of the pair of wide side faces of the case body, and
the portion of the electrode assembly holder that protrudes from the electrode assembly on the second spacer side covers the opposing wall portions of the second spacer and is bonded to the second spacer while wrapping around edges of the opposing wall portions of the second spacer that are located on a side farther from the electrode assembly.

### Item 5

An electricity storage device including:
an angular tubular case body having a rectangular cross section and open at both ends;
a first cover attached to a first opening of the case body;
a second cover attached to a second opening of the case body;
an electrode assembly housed in the case body;
a first spacer disposed between the first cover and the electrode assembly inside the case body;
a second spacer disposed between the second cover and the electrode assembly inside the case body; and
an electrode assembly holder, in which
the case body includes
   a pair of opposing wide side faces, and
   a pair of opposing narrow side faces,
the first spacer includes
   a partition wall portion disposed on the electrode assembly side between the first cover and the electrode assembly and having a length in a direction in which the pair of wide side faces oppose each other shorter than a length of the electrode assembly, and
   a pair of opposing wall portions each extending from the partition wall portion along inner faces of the pair of wide side faces of the case body,
the electrode assembly holder covers the electrode assembly along an inner face of the case body and protrudes from the electrode assembly on the first spacer side and the second spacer side, and
the portion of the electrode assembly holder that protrudes from the electrode assembly covers the opposing wall portions of the first spacer and is bonded to the first spacer while wrapping around edges of the opposing wall portions that are located on a side farther from the electrode assembly.

### Item 6

The electricity storage device according to Item 5, in which the portion of the electrode assembly holder that protrudes from the electrode assembly is bonded to the first spacer in a slack state while wrapping around the edges of the opposing wall portions that are located on a side farther from the electrode assembly.

### Item 7

The electricity storage device according to Item 5 or 6, in which the portion of the electrode assembly holder wrapped around the edges of the opposing wall portions on the side farther from the electrode assembly is bonded to inner faces of the opposing wall portions of the first spacer.

### Item 8

The electricity storage device according to any one of Items 5 to 7, in which
the second spacer includes
   a partition wall portion disposed on the electrode assembly side between the second cover and the electrode assembly and having a length in the direction in which the pair of wide side faces oppose each other shorter than the length of the electrode assembly, and
   a pair of opposing wall portions each extending from the partition wall portion along inner faces of the pair of wide side faces of the case body, and
the portion of the electrode assembly holder that protrudes from the electrode assembly on the second spacer side covers the opposing wall portions of the second spacer and is bonded to the second spacer while wrapping around edges of the opposing wall portions of the second spacer that are located on a side farther from the electrode assembly.

## Claims

1. A method for manufacturing an electricity storage device (1), the electricity storage device (1) comprising:
an angular tubular case body (10) having a rectangular cross section and open at both ends;
a first cover (20a) attached to a first opening (12a) of the case body (10);
a second cover (20b) attached to a second opening (12b) of the case body (10);
an electrode assembly (30) housed in the case body (10);
a first spacer (40) disposed between the first cover (20a) and the electrode assembly (30) inside the case body (10);
a second spacer (50) disposed between the second cover (20b) and the electrode assembly (30) inside the case body (10); and
an electrode assembly holder (90) covering the electrode assembly (30) along an inner face of the case body (10), the method comprising:
preparing the case body (10);
preparing an internal structure (100) formed by combining the electrode assembly (30), the first spacer (40), the second spacer (50), and the electrode assembly holder (90); and
inserting the internal structure (100) into the case body (10) from the first opening (12a), with the second spacer (50) inserted first, wherein
the case body (10) to be prepared includes
a pair of opposing wide side faces (16a, 16b), and
a pair of opposing narrow side faces (14a, 14b),
the first spacer (40) includes
a partition wall portion (41) disposed on the electrode assembly (30) side between the first cover (20a) and the electrode assembly (30) and having a length (D1) in a direction (Y) in which the pair of wide side faces (16a, 16b) oppose each other shorter than a length (D2) of the electrode assembly (30), and
a pair of opposing wall portions (42a, 42b) each extending from the partition wall portion (41) along inner faces of the pair of wide side faces (16a, 16b) of the case body (10),
the electrode assembly holder (90) covers the electrode assembly (30) which has the first spacer (40) and the second spacer (50) disposed on both sides thereof,
the electrode assembly holder (90) protrudes from the electrode assembly (30) on both sides thereof, and
the portion (92) of the electrode assembly holder (90) that protrudes from the electrode assembly (30) covers at least a portion of the opposing wall portions (42a, 42b) of the first spacer (40) and is bonded to the first spacer (40) while wrapping around edges (42a4, 42b4) of the opposing wall portions (42a, 42b) that are located on a side farther from the electrode assembly (30).

2. The method for manufacturing an electricity storage device (1) according to claim 1, wherein, in the internal structure (100), the electrode assembly holder (90) is bonded to the first spacer (40) in a slack state while wrapping around the edges (42a4, 42b4) of the opposing wall portions (42a, 42b) that are located on a side farther from the electrode assembly (30).

3. The method for manufacturing an electricity storage device (1) according to claim 1 or 2, wherein, in the internal structure (100), a portion (94) of the electrode assembly holder (90) that is wrapped around the edges (42a4, 42b4) of the opposing wall portions (42a, 42b) on the side farther from the electrode assembly (30) is bonded to inner faces (42a3, 42b3) of the opposing wall portions (42a, 42b) of the first spacer (40).

4. The method for manufacturing an electricity storage device (1) according to any one of claims 1 to 3, wherein
the second spacer (50) includes
a partition wall portion (51) disposed on the electrode assembly (30) side between the second cover (20b) and the electrode assembly (30) and having a length in the direction (Y) in which the pair of wide side faces (16a, 16b) oppose each other shorter than the length (D2) of the electrode assembly (30), and
a pair of opposing wall portions (52a, 52b) each extending from the partition wall portion (51) along inner faces of the pair of wide side faces (16a, 16b) of the case body (10), and
the portion (96) of the electrode assembly holder (90) that protrudes from the electrode assembly (30) on the second spacer (50) side covers the opposing wall portions (52a, 52b) of the second spacer (50) and is bonded to the second spacer (50) while wrapping around edges of the opposing wall portions (52a, 52b) of the second spacer (50) that are located on a side farther from the electrode assembly (30).

5. An electricity storage device (1) comprising:
an angular tubular case body (10) having a rectangular cross section and open at both ends;
a first cover (20a) attached to a first opening (12a) of the case body (10);
a second cover (20b) attached to a second opening (12b) of the case body (10);
an electrode assembly (30) housed in the case body (10);
a first spacer (40) disposed between the first cover (20a) and the electrode assembly (30) inside the case body (10);
a second spacer (50) disposed between the second cover (20b) and the electrode assembly (30) inside the case body (10); and
an electrode assembly holder (90), wherein
the case body (10) includes
a pair of opposing wide side faces (16a, 16b), and
a pair of opposing narrow side faces (14a, 14b),
the first spacer (40) includes
a partition wall portion (41) disposed on the electrode assembly (30) side between the first cover (20a) and the electrode assembly (30) and having a length (D1) in a direction (Y) in which the pair of wide side faces (16a, 16b) oppose each other shorter than a length (D2) of the electrode assembly (30), and
a pair of opposing wall portions (42a, 42b) each extending from the partition wall portion (41) along inner faces of the pair of wide side faces (16a, 16b) of the case body (10),
the electrode assembly holder (90) covers the electrode assembly (30) along an inner face of the case body (10) and protrudes from the electrode assembly (30) on the first spacer (40) side and the second spacer (50) side, and
the portion (92) of the electrode assembly holder (90) that protrudes from the electrode assembly (30) covers the opposing wall portions (42a, 42b) of the first spacer (40) and is bonded to the first spacer (40) while wrapping around edges (42a4, 42b4) of the opposing wall portions (42a, 42b) that are located on a side farther from the electrode assembly (30).

6. The electricity storage device (1) according to claim 5, wherein the portion (92) of the electrode assembly holder (90) that protrudes from the electrode assembly (30) is bonded to the first spacer (40) in a slack state while wrapping around the edges (42a4, 42b4) of the opposing wall portions (42a, 42b) that are located on a side farther from the electrode assembly (30).

7. The electricity storage device (1) according to claim 5 or 6, wherein the portion (94) of the electrode assembly holder (90) that is wrapped around the edges (42a4, 42b4) of the opposing wall portions (42a, 42b) on the side farther from the electrode assembly (30) is bonded to inner faces (42a3, 42b3) of the opposing wall portions (42a, 42b) of the first spacer (40).

8. The electricity storage device (1) according to any one of claims 5 to 7, wherein the second spacer (50) includes
a partition wall portion (51) disposed on the electrode assembly (30) side between the second cover (20b) and the electrode assembly (30) and having a length in the direction (Y) in which the pair of wide side faces (16a, 16b) oppose each other shorter than the length (D2) of the electrode assembly (30), and
a pair of opposing wall portions (52a, 52b) each extending from the partition wall portion (51) along inner faces of the pair of wide side faces (16a, 16b) of the case body (10), and
the portion (96) of the electrode assembly holder (90) that protrudes from the electrode assembly (30) on the second spacer (50) side covers the opposing wall portions (52a, 52b) of the second spacer (50) and is bonded to the second spacer (50) while wrapping around edges of the opposing wall portions (52a, 52b) of the second spacer (50) that are located on a side farther from the electrode assembly (30).
